# EUROPÄISCHE PATENTSCHRIFT

(11) **EP 0 402 741 B1**
(45) Veröffentlichungstag und Bekanntmachung des Hinweises auf die Patenterteilung: **13.09.1995**
(21) Anmeldenummer: 90110628.6
(22) Anmeldetag: 05.06.1990
(51) Int. Cl.: H04L 12/56, H04L 12/26, H04L 29/14

(54) **Verfahren und Schaltungsanordnung für das Weiterleiten von nach einem asynchronen Transfermodus übertragenen Zellen**
Method and circuit arrangement for forwarding cells transmitted in an asynchronous transfer mode
Méthode et dispositif pour la retransmission des cellules transmises en mode de transfert asynchrone

(30) Priorität: 16.06.1989 DE 3919798
(43) Veröffentlichungstag der Anmeldung: 19.12.1990
(73) Patentinhaber: SIEMENS AKTIENGESELLSCHAFT, 80333 München (DE)
(72) Erfinder: Kammerl, Anton, Dr.-Ing., D-8038 Gröbenzell (DE)

(56) Entgegenhaltungen:
- EP-A- 0 170 328
- CCITT, ISDN EXPERTS OF STUDY GROUP XVIII, STUDY GROUP XVIII - CONTRIBUTION NO. D. 20, San Diego, CA, 23. Januar - 3. Febr. 1989, Seiten 1-6; "Proposed error detection and single bit error correction scheme for the ATM cell header"

## Beschreibung

Die Erfindung betrifft ein Verfahren gemäß Oberbegriff des Patentanspruches 1 und Schaltungsanordnungen zur Durchführung des Verfahrens.

Es ist bereits vorgeschlagen worden ("study group XVIII-contribution No. D20", San Diego, 23.1. bis 3.2.1989), Fehlleitungen von Zellen in einem nach einem asynchronen Transfermodus (ATM) betriebenen Vermittlungsnetz durch eine Vermittlungseinrichtung dadurch zu reduzieren, daß in den den Zellen zugehörigen Zellenköpfen neben für die Weiterleitung erforderlichen Steuerinformationen diesen zugeordnete Sicherungsinformationen übertragen werden und in einer Vermittlungseinrichtung eine Auswertung Zugeführter Zellen hinsichtlich des Auftretens von Bitfehlern in den Zellenköpfen durchgeführt wird. Dafür ist in der jeweiligen Vermittlungseinrichtung für die Empfangsrichtung jeder Übertragungsleitung eine aus einer Fehlerkorrektureinrichtung und einer Fehlererkennungseinrichtung bestehende Auswerteeinrichtung vorgesehen. Bei einer zunächst fehlerfreien Übertragung von Zellen ist die Fehlerkorrektureinrichtung aktiviert. Wird von dieser im Zellenkopf einer übertragenen Zelle ein Fehler erkannt, wird dieser im Falle eines Einzelbitfehlers korrigiert und die betreffende Zelle weitergeleitet. Anschließend wird für die Auswertung nachfolgender Zellen die Fehlererkennungseinrichtung aktiviert. Diese verhindert bei Erkennen eines Fehlers in einem Zellenkopf das Weiterleiten der diesem zugehörigen Zelle. Sobald ein Zellenkopf von der Fehlererkennungseinrichtung als fehlerfrei erkannt ist, wird die zugehörige Zelle weitergeleitet und die Fehlerkorrektureinrichtung für eine Auswertung nachfolgender Zellen erneut aktiviert. Der Nachteil dieses Verfahrens besteht darin, daß insbesondere bei länger andauernden Fehlerbündeln, wie sie beispielsweise bei der Ersatzschaltung gestörter Übertragungsleitungen auftreten können, durch beliebige Störmuster immer wieder fehlerfreie Zellenköpfe vorgetäuscht werden. Sei jedem als fehlerfrei vorgetäuschten Zellenkopf wird die zugehörige Zelle von der Fehlererkennungseinrichtung weitergeleitet und damit mit Sicherheit fehlgeleitet. Außerdem wird nach dem Auftreten eines vorgetäuschten fehlerfreien Zellenkopfes die Fehlerkorrektureinrichtung für die weitere Auswertung von Zellen aktiviert. Da aber bei einem Fehlerbündel damit gerechnet werden muß, daß die auf die Zelle mit dem vorgetäuschten fehlerfreien Zellenkopf folgende Zelle auch gestört ist, kommt es in vielen Fällen zu einer Falschkorrektur und damit zu einer Fehlleitung der jeweiligen Zelle.

Es ist nun Aufgabe der vorliegenden Erfindung, einen Weg zu zeigen, wie bei einem Verfahren und einer Schaltungsanordnung gemäß Oberbegriff des Patentanspruches 1 die Fehlleitung von Zellen gegenüber dem Stand der Technik reduziert werden kann.

Gelöst wird die vorstehend aufgezeigte Aufgabe bei einem Verfahren gemäß Oberbegriff des Patentanspruches 1 durch die im kennzeichnenden Teil dieses Patentanspruches angegebenen Verfahrensmerkmale.

Der Vorteil der Erfindung besteht darin, daß das Auftreten von Fehlerbündeln gesondert überwacht wird und bei Vorliegen eines solchen bis zu dessen Ende das Weiterleiten von jeweils einen mit großer Wahrscheinlichkeit vorgetäuschten fehlerfreien Zellenkopf aufweisenden Zellen verhindert wird. Das vorgeschlagene Verfahren reduziert damit die während länger andauernder Fehlerbündel auftretenden Fehlleitungen von Zellen wesentlich gegenüber dem Stand der Technik. Selbst wenn die Auftrittswahrscheinlichkeit für länger andauernde Fehlerbündel gering ist, führt dieses Verfahren zu einer merklichen Verbesserung der Übertragungsqualität innerhalb eines nach einem asynchronen Transfermodus betriebenen Vermittlungsnetz.

Vorteilhafte Ausgestaltungen des Verfahrens gemäß der vorliegenden Erfindung ergeben sich aus den Patentansprüchen 2 und 3. Bei der Ausgestaltung gemäß Patentanspruch 2 erfolgt die Auswertung übertragener Zellen in unterschiedlichen Modi, nämlich in einem Korrekturmodus und einem Fehlererkennungsmodus. Der Vorteil dieses Verfahrens besteht darin, daß im Fehlererkennungsmodus bei Auftreten eines Fehlerbündels das Weiterleiten von mit großer Wahrscheinlichkeit vorgetäuschte fehlerfreie Zellenköpfe aufweisenden Zellen verhindert wird und lediglich nach dem Ende eines Fehlerbündels eine Auswertung übertragener Zellen im Korrekturmodus erfolgt, d.h., daß bei Auftreten eines Fehlerbündels eine Korrektur von Bitfehlern in Zellenköpfen und damit eine Fehlleitung der zugehörigen Zellen verhindert wird.

Die Ausgestaltung gemäß Patentanspruch 3 bringt den Vorteil mit sich, daß der Modus für die Auswertung von übertragenen Zellen anhand der statistischen Erfassung des Auftretens von Einzelbitfehlern mit einem geringen Steuerungsaufwand festgelegt werden kann.

Eine Schaltungsanordnung für die Durchführung des Verfahrens gemäß der vorliegenden Erfindung sowie deren vorteilhafte Ausgestaltungen ergeben sich aus den Patentansprüchen 4 bis 6. Der Vorteil dieser Schaltungsanordnungen besteht dabei in dem besonders geringen schaltungstechnischen Aufwand für das Auswerten übertragener Zellen hinsichtlich des Auftretens von Fehlerbündeln.

Im folgenden wird nun die vorliegende Erfindung anhand von Zeichnungen näher beschrieben.
FIG 1 zeigt ein Ausführungsbeispiel einer Schaltungsanordnung zur Durchführung des Verfahrens gemäß der vorliegenden Erfindung und
FIG 2 zeigt eine Erweiterung der in FIG 1 dargestellten Schaltungsanordnung.

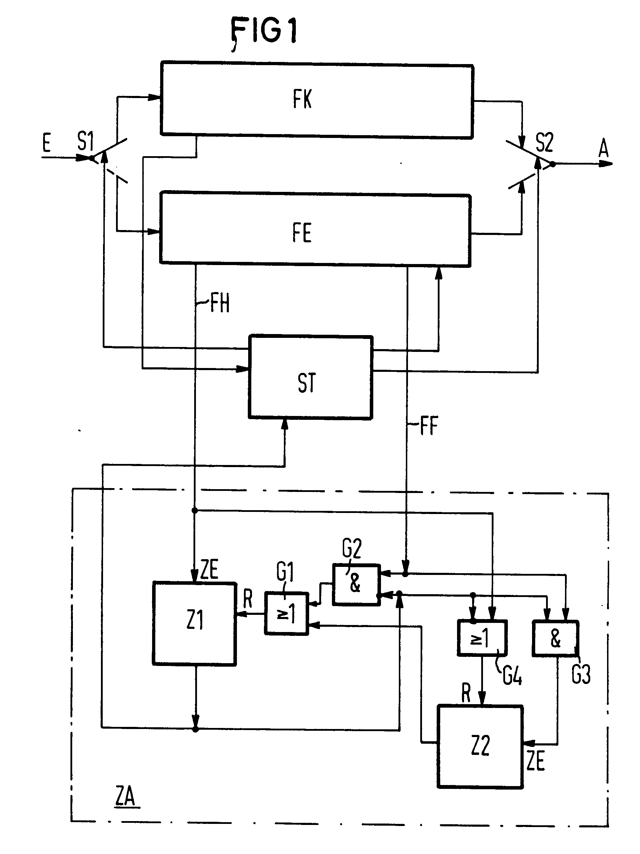

Die in FIG 1 dargestellte Schaltungsanordnung dient als Auswerte einrichtung in nicht dargestellten Vermittlungseinrichtungen eines nach einem asynchronen Transfermodus (ATM) betriebenen Vermittlungsnetzes. Derartige Auswerteeinrichtungen sind dabei den der jeweiligen Vermittlungseinrichtung zugeführten Übertragungsleitungen empfangsseitig individuell zugeordnet. Diese Auswerteeinrichtungen erhalten jeweils über die zugeordnete Übertragungsleitung Zellen (Pakete) beispielsweise fester Länge zugeführt, in welchen den eigentlich zu übertragenden Nachrichtensignalen jeweils ein Zellenkopf ("header") vorangestellt ist. Ein solcher Zellenkopf enthält in bekannter Weise für die Weiterleitung der jeweiligen Zelle erforderliche Steuerinformationen sowie diesen zugeordnete Sicherungsinformationen. Anhand dieser Sicherungsinformationen erfolgt in der in FIG 1 dargestellten Auswerteeinrichtung, wie im folgenden noch erläutert werden wird, eine Überprüfung übertragener Zellen hinsichtlich des Auftretens von Bitfehlern in den zugehörigen Zellenköpfen.

Das Anfügen von Sicherungsinformationen an zu übertragende Informationen mit Hilfe eines Codierers ist bereits bekannt. In diesem Zusammenhang sind auch bereits unterschiedliche Verfahren zur Bildung der Sicherungsinformationen vorgeschlagen worden. Als Beispiele seien hier Sicherungsinformationen genannt, die nach dem sogenannten Hamming-Code bzw. einem zyklischen Code (CRC) gebildet sind. Derartige Codes ermöglichen einerseits das Erkennen von Übertragungsfehlern in den zu sichernden Informationen und andererseits das Korrigieren bestimmter Übertragungsfehler. So ist es beispielsweise mit nach dem Hamming-Code gebildeten Sicherungsinformationen möglich, das Auftreten von Ein- oder Mehrbitfehlern in den zu sichernden Informationen zu erkennen und Einbitfehler zu korrigieren. Ein zyklischer Code ermöglicht dagegen auch eine Korrektur von Mehrbitfehlern. Im folgenden wird davon ausgegangen, daß die in FIG 1 dargestellte Auswerteeinrichtung das Auftreten von Ein-oder Mehrfachbitfehlern erkennen und Einzelbitfehler korrigieren möge. Dabei kann gegebenenfalls auch ein von den zuvor genannten Verfahren abweichendes Verfahren für die Bildung von Sicherungsinformationen benutzt sein.

Die in FIG 1 dargestellte Auswerteeinrichtung (Decodiereinrichtung) möge mit ihrem Eingang E an die Empfangsseite einer Übertragungsleitung einer Vermittlungseinrichtung angeschlossen sein. Mit diesem ist ein Umschalter S1 verbunden, über den der Eingang E wahlweise mit einer Fehlerkorrektureinrichtung FK oder einer Fehlererkennungseinrichtung FE verbindbar ist. Die Fehlerkorrektureinrichtung dient dabei für das Erkennen von Ein- und Mehrbitfehlern in Zellenköpfen zugeführter Zellen sowie für die Korrektur von Einbitfehlern. Dagegen dient die genannte Fehlererkennungseinrichtung lediglich für das Erkennen von Ein-und Mehrbitfehlern in Zellenköpfen zugeführter Zellen. Auf den Aufbau derartiger Einrichtungen wird im folgenden nicht näher eingegangen, da dieser für das Verständnis der vorliegenden Erfindung nicht wesentlich ist. Es sei hier lediglich darauf hingewiesen, daß derartige Einrichtungen bei Verwendung eines zyklischen Codes für die Bildung von Sicherungsinformationen beispielsweise Decodiereinrichtungen enthalten können, wie sie in "Kodierung und Datenübertragung", N.B. Seliger, R.Oldenbourg Verlag München/Wien 1975, auf den Seiten 96 bis 98 beschrieben sind.

Die Fehlerkorrektureinrichtung FK und die Fehlererkennungseinrichtung FE sind ausgangsseitig über einen weiteren Umschalter S2 mit dem Ausgang A der Auswerteeinrichtung verbindbar. Die beiden genannten Umschalter sind dabei von einer Steuereinrichtung ST her steuerbar. Diese Steuereinrichtung steht mit einem Steuereingang mit der Fehlerkorrektureinrichtung FK und mit einem Steuerausgang mit der Fehlererkennungseinrichtung FE in Verbindung.

Die Fehlererkennungseinrichtung FE ist über zwei Steuerleitungen FH und FF mit einer Zähleranordnung ZA, die für das Erkennen des Beginns und des Endes von Fehlerbündeln vorgesehen ist, verbunden. Die Steuerleitung FH dient dabei für die Übertragung eines Steuersignals beispielsweise in Form eines logischen Pegels "1", wenn von der Fehlererkennungseinrichtung ein Übertragungsfehler in einem aufgenommenen Zellenkopf festgestellt wird. Erkennt dagegen die Fehlererkennungseinrichtung einen fehlerfreien Zellenkopf, so überträgt diese über die Steuerleitung FF ein Steuersignal beispielsweise wieder in Form eines logischen Pegels "1".

Die Zähleranordnung ZA weist einen ersten Zähler Z1 auf, welcher über einen Zähleingang ZE mit der Steuerleitung FH und über einen Zählerausgang mit der bereits genannten Steuereinrichtung ST verbunden ist. An einen Rücksetzeingang R dieses Zählers ist der Ausgang eines ODER-Gliedes G1 herangeführt. Mit einem ersten Eingang ist dieses ODER-Glied an den Ausgang eines UND-Gliedes G2 angeschlossen, welches eingangsseitig einerseits mit der bereits genannten Steuerleitung FF und andererseits über einen negierenden Eingang mit dem Zählerausgang des Zählers Z1 in Verbindung steht.

Die Zähleranordnung ZA weist einen weiteren Zähler Z2 auf, der über einen Zählausgang an den zweiten Eingang des bereits genannten ODER-Gliedes G1 angeschlossen ist. An einem mit ZE bezeichneten Eingang erhält dieser Zähler Zählsignale über ein UND-Glied G3 zugeführt. Dieses steht eingangsseitig mit der Steuerleitung FF und dem Zählausgang des Zählers Z1 in Verbindung. Ein mit diesem Zählausgang über einen negierenden Eingang und der Steuerleitung FH über einen nichtnegierenden Eingang verbundenes ODER-Glied G4 ist ausgangsseitig schließlich an einen Rücksetzeingang R des Zählers Z2 herangeführt.

Nachdem zuvor der Aufbau der in FIG 1 dargestellten Auswerteeinrichtung beschrieben worden ist, wird nunmehr auf deren Wirkungsweise näher eingegangen.

Es wird zunächst davon ausgegangen, daß durch die Steuereinrichtung ST die Umschalter S1 und S2 derart gesteuert sind, daß zunächst über den Eingang E eintreffende Zellen der Fehlerkorrektureinrichtung FK zugeführt sind und deren Ausgang mit dem Ausgang A der Auswerteeinrichtung verbunden ist. Dabei werden bei Auftreten von fehlerfreien Zellenköpfen die zugehörigen Zellen direkt weitergeleitet. Erkennt dagegen die Fehlerkorrektureinrichtung einen fehlerhaft übertragenen Zellenkopf, so wird dieser bei Vorliegen eines Einzelbitfehlers korrigiert und anschließend die zugehörige Zelle weitergeleitet. Liegt dagegen ein nicht korrigierbarer Bitfehler vor, so wird das Weiterleiten der zugehörigen Zelle verhindert. Unabhängig von der Art der Behandlung einer einen fehlerhaften Zellenkopf aufweisenden Zelle wird anschließend von der Fehlerkorrektureinrichtung FK her ein Steuersignal zu der Steuereinrichtung ST hin übertragen. Auf das Auftreten eines solchen Steuersignals hin werden die Umschalter S1 und S2 derart gesteuert, daß nunmehr die Fehlererkennungseinrichtung FE mit dem Eingang E und dem Ausgang A der Auswerteeinrichtung verbunden ist. Diese Fehlererkennungseinrichtung überprüft lediglich die Zellenköpfe zugeführter Zellen hinsichtlich des Auftretens von Bitfehlern. Tritt dabei ein fehlerhafter Zellenkopf auf, so wird das Weiterleiten der gerade zugeführten Zelle verhindert. Gleichzeitig wird dem Zähler Z1 der Zähleranordndung ZA, der sich zunächst in einem festgelegten Anfangszählerstand, beispielsweise in einem Anfangszählerstand "0", befinden möge, ein Zählsignal über die Steuerleitung FH zugeführt. Damit erhöht sich der Zählerstand beispielsweise auf "1". Tritt die unmittelbar nachfolgende Zelle mit einem fehlerfreien Zellenkopf auf, so wird durch die Fehlererkennungseinrichtung FE diese Zelle weitergeleitet und gleichzeitig dem Zähler Z1 über die Steuerleitung FF ein Steuersignal zugeführt. Dieses Steuersignal bewirkt über das UND-Glied G2 und das ODER-Glied G1 das Rücksetzen des Zählers Z1 in seinen Anfangszählerstand. Außerdem führt die Fehlererkennungseinrichtung FE über eine nicht dargestellte Steuerleitung oder über die Steuerleitung FF der Steuereinrichtung ST ein Steuersignal zu. Auf das Auftreten eines solchen Steuersignals hin werden von der Steuereinrichtung die beiden Umschalter S1 und S2 wieder so gesteuert, daß über den Eingang eintreffende Zellen zunächst in der zuvor beschriebenen Weise von der Fehlerkorrektureinrichtung FK ausgewertet werden. Erkennt die Fehlererkennungseinrichtung FE bei ihrer Einbeziehung in die Auswertung von Zellen eine Mehrzahl unmittelbar aufeinanderfolgender Zellen mit jeweils einem fehlerhaften Zellenkopf, so wird der momentane Zählerstand des Zählers Z1 fortlaufend erhöht. Bei Erreichen eines festgelegten maximalen Zählerstandes, der beispielsweise "2" betragen möge, gibt der Zähler Z1 an seinem Zählausgang ein Steuersignal ab. Der maximale Zählerstand und das damit im Zusammenhang stehende Steuersignal bleiben auch erhalten, wenn weitere Zellen mit fehlerhaften Zellenköpfen eintreffen. Das Auftreten dieses Steuersignals wird von der Steuereinrichtung ST als Beginn eines Fehlerbündels bewertet und bewirkt in dieser die Abgabe eines Steuersignals über den obenerwähnten Steuerausgang zu der Fehlererkennungseinrichtung FE hin. Mit dem Auftreten dieses Steuersignals wird von der Fehlererkennungseinrichtung das Weiterleiten einer nachfolgenden Zelle mit einem mit großer Wahrscheinlichkeit als fehlerfrei vorgetäuschten Zellenkopf verhindert. Gleichzeitig wird aber dem Zähler Z2, der sich zunächst in seinem Anfangszählerstand (beispielsweise "0") befinden möge, ein Zählsignal zugeführt. Damit erhöht sich dessen Zählerstand beispielsweise auf "1". Dieses Erhöhen des Zählerstandes wird mit jeder weiteren unmittelbar folgenden, einen fehlerfreien Zellenkopf aufweisenden Zelle fortgesetzt. Das Erkennen einer Zelle mit einem fehlerhaften Zellenkopf führt dagegen durch ein über die Steuerleitung FH und das ODER-Glied G4 übertragenes Steuersignal zu einem Rücksetzen des Zählers Z2 in seinen Anfangszählerstand.

Bei Erreichen eines festgelegten Zählerstandes des Zählers Z2, der beispielsweise "2" betragen möge, tritt am Zählausgang dieses Zählers ein Steuersignal auf, welches über das ODER-Glied G1 dem Rücksetzeingang des Zählers Z1 zugeführt ist. Das Auftreten dieses Steuersignals bewirkt das Rücksetzen des Zählers Z1 in dessen Anfangszählerstand. Bei diesem Anfangszählerstand gibt der Zähler Z1 an seinem Zählausgang ein Steuersignal ab, welches einerseits der Steuereinrichtung ST und andererseits über das ODER-Glied G4 dem Zähler Z2 zugeführt ist. Damit wird auch der Zähler Z2 in den Anfangszählerstand rückgesetzt. Das Auftreten dieses Steuersignals am Zählausgang des Zählers Z1 wird in der Steuereinrichtung ST als Ende des gerade bestandenen Fehlerbündels bewertet. Diese gibt daraufhin über den obenerwähnten Steuerausgang ein Steuersignal an die Fehlererkennungseinrichtung FE ab, die daraufhin die gerade ausgewertete, einen fehlerfreien Zellenkopf aufweisende Zelle an den Ausgang A weiterleitet. Bei dem angenommenen Beispiel wird also von den zwei aufeinanderfolgenden Zellen mit fehlerfreiem Zellenkopf die erste unterdrückt und lediglich die zweite weitergeleitet. Anschließend steuert die Steuereinrichtung ST die beiden Umschalter S1 und S2 wieder so, daß nachfolgend eintreffende Zellen zunächst wieder durch die Fehlerkorrektureinrichtung FK ausgewertet werden.

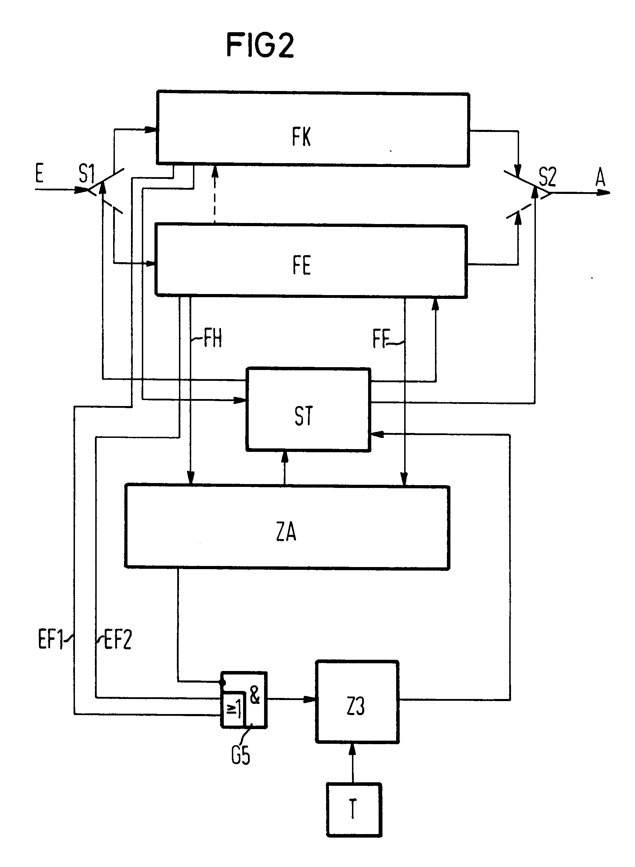

In FIG 2 ist eine erweiterte Auswerteeinrichtung dargestellt, die neben den in FIG 1 dargestellten Einrichtungen zusätzlich eine Einrichtung für die statistische Erfassung des Auftretens von Einzelbitfehlern aufweist. Diese Einrichtung besteht aus einem Verknüpfungsglied G5, einem mit dessen Ausgang verbundenen Zähler Z3 und einem Zeitgeber T, der mit einem Ausgang mit einem Rücksetzeingang des Zählers Z3 verbunden ist. An die Steuereinrichtung ST ist dabei der Zählausgang des Zählers Z3 angeschlossen. Das Verknüpfungsglied G5 weist zwei nichtinvertierende Eingänge und einen invertierenden Eingang auf. Der invertierende Eingang, der als Freigabeeingang dient, steht mit dem Zählausgang des in FIG 1 dargestellten Zählers Z1 der Zähleranordnung ZA in Verbindung. Ein erster nichtinvertierender Eingang ist über eine Steuerleitung EF1 mit der Fehlerkorrektureinrichtung FK verbunden. Der zweite nichtinvertierende Eingang steht dagegen über eine Steuerleitung EF2 mit der Fehlererkennungseinrichtung FE in Verbindung.

Über die beiden gerade genannten Steuerleitungen EFI und EF2 wird von der Fehlerkorrektureinrichtung FK bzw. der Fehlererkennungseinrichtung FE immer dann ein Steuersignal in Form eines logischen Pegels "1" übertragen, wenn bei der Auswertung von Zellenköpfen übertragener Zellen ein Einzelbitfehler festgestellt wird. Ein solches Steuersignal wird dem Zähler Z3 als Zählsignal über das Verknüpfungsglied G5 zugeführt, wenn der Zählerstand des Zählers Z1 der Zähleranordnung ZA einen unterhalb des maximalen Zählerstandes liegenden Wert aufweist, d. h. wenn kein Fehlerbündel vorliegt. Damit wird erreicht, daß während eines Fehlerbündels vorgetäuschte Einzelbitfehler den Zähler Z3 nicht beeinflussen und damit für die statistische Erfassung von Einzelbitfehlern unberücksichtigt bleiben. Der Zähler Z3 wird in periodischen Abständen durch den Zeitgeber T in seinen Anfangszählerstand, der beispielsweise "0" sein möge, rückgesetzt. Von diesem Anfangszählerstand aus wird der Zählerstand mit jedem Auftreten eines Zählsignals erhöht. Bei Erreichen eines festgelegten Zählerstandes, der einer bestimmten Wahrscheinlichkeit für das Auftreten von Einzelbitfehlern entspricht, gibt dieser Zähler ein Steuersignal an die Steuereinrichtung ST ab. Bei Auftreten eines solchen Steuersignals steuert die Steuereinrichtung ST das obenbeschriebene Umschalten von der Fehlererkennungseinrichtung FE auf die Fehlerkorrektureinrichtung FK für die Auswertung nachfolgender Zellen. Tritt dagegen ein solches Steuersignal nicht auf, d. h. ist die bestimmte Wahrscheinlichkeit für das Auftreten von Einzelbitfehlern unterschritten, so erfolgt eine Auswertung von Zellen ausschließlich in der Fehlererkennungseinrichtung FE.

Bei Verwendung einer Fehlererkennungseinrichtung FE, welche lediglich das Auftreten von Bitfehlern in Zellenköpfen erkennt, jedoch nicht zwischen Ein- und Mehrbitfehlern unterscheiden kann, kann für die statistische Erfassung von Einzelbitfehlern die in FIG 2 dargestellte Auswerteeinrichtung so modifiziert sein, daß bei einer Auswertung von übertragenen Zellen durch die Fehlererkennungseinrichtung FE diese Zellen zusätzlich auch der Fehlerkorrektureinrichtung FK, beispielsweise über eine zwischen den beiden Einrichtungen vorgesehene, in FIG 2 durch eine unterbrochene Linie dargestellte Steuerleitung, zugeführt sind. Durch den Umschalter S2 ist dabei sichergestellt, daß bei einer Einbeziehung der Fehlererkennungseinrichtung FE in die Auswertung von Zellen lediglich von dieser als fehlerfrei erkannte Zellen an den Ausgang A der Auswerteeinrichtung weitergeleitet werden.

Im übrigen kann die in FIG 1 dargestellte Auswerteeinrichtung auch so modifiziert sein, daß lediglich eine Fehlererkennungseinrichtung vorhanden ist, d. h. daß nur eine Erkennung von Bitfehlern in Zellenköpfen und eine damit verbundene Behandlung der zugehörigen Zellen durchgeführt wird. Die Verwendung lediglich einer solchen Fehlerbehandlungseinrichtung könnte beispielsweise dann vorgesehen sein, wenn sich Störungen in einem Vermittlungsnetz stets als Mehrbitfehler auswirken.

Abschließend sei auch noch darauf hingewiesen, daß einerseits die anhand der FIG 1 beschriebene Zähleranordnung ZA hinsichtlich der Festlegung der Endzählerstände der Zähler Z1 und Z2 je nach Bedarf modifiziert sein kann und andererseits die Funktion der Zähleranordnung ZA auch durch einen von dem zuvor beschriebenen schaltungstechnischen Aufbau abweichenden schaltungstechnischen Aufbau realisiert sein kann.

## Patentansprüche

1. Verfahren für das Weiterleiten von nach einem asynchronen Transfermodus (ATM) über wenigstens eine Übertragungsleitung übertragener Zellen, in deren jeweiligen Zellenkopf Steuerinformationen sowie diesen beigefügte Sicherungsinformationen enthalten sind, durch eine Vermittlungseinrichtung, in welcher anhand der Sicherungsinformationen eine Auswertung übertragener Zellen hinsichtlich des Auftretens von Bitfehlern in den Zellenköpfen durchgeführt und das Weiterleiten von hinsichtlich der Zellenköpfe als fehlerhaft erkannten Zellen verhindert wird,
**dadurch gekennzeichnet**,
daß ein Auftreten einer eine festgelegte Anzahl von unmittelbar aufeinanderfolgenden, als fehlerhaft erkannten Zellen umfassenden ersten Zellengruppe als Beginn eines Fehlerbündels gewertet wird,
daß bei Vorliegen eines Fehlerbündels das Weiterleiten als fehlerfrei erkannter Zellen bis zum Auftreten einer eine festgelegte Anzahl von unmittelbar aufeinanderfolgenden, als fehlerfrei erkannten Zellen umfassenden zweiten Zellengruppe verhindert wird,
daß das Auftreten der betreffenden zweiten Zellengruppe als Ende des jeweiligen Fehlerbündels gewertet wird
und daß die zuletzt übertragene der der betreffenden zweiten Zellengruppe zugehörigen Zellen weitergeleitet wird.

2. Verfahren nach Anspruch 1,
**dadurch gekennzeichnet**,
daß in der Vermittlungseinrichtung für die jeweilige Übertragungsleitung zunächst eine Auswertung übertragener Zellen in einem Korrekturmodus durchgeführt wird, in welchem bei Auftreten eines Einzelbitfehlers in einem übertragenen Zellenkopf zunächst der Einzelbitfehler korrigiert und anschließend die jeweilige Zelle weitergeleitet wird,
daß nach dem Korrigieren des Einzelbitfehlers die Auswertung nachfolgender Zellen in einem Fehlererkennungsmodus durchgeführt wird, daß in diesem Fehlererkennungsmodus das Auftreten eines Fehlerbündels überwacht und bei Vorliegen eines solchen das Weiterleiten als fehlerhaft erkannter Zellen bis zum Ende des betreffenden Fehlerbündels verhindert wird
und daß nach dem Ende des betreffenden Fehlerbündels übertragene Zellen zunächst wieder in dem Korrekturmodus ausgewertet werden.

3. Verfahren nach Anspruch 2,
**dadurch gekennzeichnet**,
daß im Fehlererkennungsmodus eine statistische Erfassung des Auftretens von Einzelbitfehlern durchgeführt wird
und daß nach Maßgabe dieser statistischen Erfassung lediglich dann in den Korrekturmodus gewechselt wird, wenn die Wahrscheinlichkeit für das Auftreten von Einzelbitfehlern oberhalb eines festgelegten Schwellwertes liegt.

4. Schaltungsanordnung für das Weiterleiten von nach einem asynchronen Transfermodus (ATM) über wenigstens eine Übertragungsleitung übertragener Zellen, in deren jeweiligen Zellenkopf Steuerinformationen sowie diesen beigefügte Sicherungsinformationen enthalten sind, durch eine Vermittlungseinrichtung, in welcher mit Hilfe einer der jeweiligen Übertragungsleitung zugeordneten Auswerteeinrichtung (FK, FE) anhand der Sicherungsinformationen eine Auswertung übertragener Zellen hinsichtlich des Auftretens von Bitfehlern in den Zellenköpfen durchgeführt und das Weiterleiten von hinsichtlich der Zellenköpfe als fehlerhaft erkannten Zellen verhindert wird, zur Durchführung des Verfahrens nach Anspruch 1,
**dadurch gekennzeichnet**,
daß mit der jeweiligen Auswerteeinrichtung eine Zähleranordnung (ZA) verbunden ist, die derart ausgebildet ist, daß diese einerseits ein Auftreten einer eine festgelegte Anzahl von unmittelbar aufeinanderfolgenden, als fehlerhaft erkannten Zellen umfassenden ersten Zellengruppe überwacht und bei Auftreten der ersten Zellengruppe ein den Beginn eines Fehlerbündels anzeigendes erstes Steuersignal bereitstellt und andererseits bei Vorliegen eines Fehlerbündels ein Auftreten einer eine festgelegte Anzahl von unmittelbar aufeinanderfolgenden, als fehlerfrei erkannten Zellen umfassenden zweiten Zellengruppe überwacht und bei Auftreten der zweiten Zellengruppe ein das Ende eines Fehlerbündels anzeigendes zweites Steuersignal bereitstellt,
und daß nach Maßgabe des ersten und zweiten Steuersignals die Auswerteeinrichtung (FK, FE) derart gesteuert ist, daß diese nach dem Auftreten des ersten Steuersignals das Weiterleiten nachfolgender, als fehlerfrei erkannter Zellen bis zum Auftreten des zweiten Steuersignals verhindert.

5. Schaltungsanordnung für das Weiterleiten von nach einem asynchronen Transfermodus (ATM) über wenigstens eine Übertragungsleitung übertragener Zellen, in deren jeweiligen Zellenkopf Steuerinformationen sowie diesen beigefügte Sicherungsinformationen enthalten sind, durch eine Vermittlungseinrichtung, in welcher anhand der Sicherungsinformationen eine Auswertung übertragener Zellen hinsichtlich des Auftretens von Bitfehlern in den Zellenkäpfen durchgeführt und das Weiterleiten von hinsichtlich der Zellenköpfe als fehlerhaft erkannten Zellen verhindert wird, wobei innerhalb der Vermittlungseinrichtung der jeweiligen Übertragungsleitung eine in einem Korrekturmodus arbeitende erste Einrichtung (FK) und eine in einem Fehlererkennungsmodus arbeitende zweite Einrichtung (FE) zugeordnet sind, welche von einer Steuereinrichtung (ST) her derart steuerbar sind, daß zunächst die erste Einrichtung, nach dem Erkennen einer fehlerhaften Zelle durch diese dagegen die zweite Einrichtung für eine Auswertung übertragener Zellen aktiviert ist, zur Durchführung des Verfahrens nach Anspruch 2,
**dadurch gekennzeichnet**,
daß mit der zweiten Einrichtung (FE) eine Zähleranordnung (ZA) verbunden ist, welche derart ausgebildet ist, daß diese einerseits das Auftreten einer eine festgelegte Anzahl von unmittelbar aufeinanderfolgenden, als fehlerhaft erkannten Zellen umfassenden ersten Zellengruppe überwacht und bei Auftreten dieser ersten Zellengruppe ein den Beginn eines Fehlerbündels anzeigendes erstes Steuersignal bereitstellt und andererseits bei Vorliegen eines Fehlerbündels das Auftreten einer eine festgelegte Anzahl von unmittelbar aufeinanderfolgenden, als fehlerfrei erkannten Zellen umfassenden zweiten Zellengruppe überwacht und bei Auftreten der zweiten Zellengruppe ein das Ende eines Fehlerbündels anzeigendes zweites Steuersignal bereitstellt,
daß das erste und das zweite Steuersignal der Steuereinrichtung (ST) zugeführt sind,
daß die Steuereinrichtung auf das Auftreten des ersten Steuersignals hin die zweite Einrichtung (FE) derart steuert, daß durch diese das Weiterleiten von nachfolgend übertragenen, als fehlerfrei erkannten Zellen bis zum Auftreten des zweiten Steuersignals verhindert ist,
und daß nach dem Auftreten des zweiten Steuersignals die erste Einrichtung (FK) für die Auswertung übertragener Zellen erneut aktiviert ist.

6. Schaltungsanordnung nach Anspruch 5.
**dadurch gekennzeichnet**,
daß eine weitere Zähleranordnung (Z3, G5, T) für die statistische Erfassung des Auftretens von Einzelbitfehlern vorgesehen ist, welche bei Nichtvorliegen eines Fehlerbündels die innerhalb eines vorgegebenen Zeitintervalls auftretenden Einzelbitfehler akkumuliert und bei Erreichen eines festgelegten Schwellwertes durch die akkumulierten Einzelbitfehler ein drittes Steuersignal bereitstellt,
und daß von der Steuereinrichtung (ST) her auf das Bereitstellen des dritten Steuersignals hin die erste Einrichtung (FK) für die Auswertung nachfolgend übertragener Zellen erneut aktiviert ist, während bei Nichtbereitstellen des dritten Steuersignals die zweite Einrichtung (FE) für die Auswertung nachfolgend übertragener Zellen aktiviert bleibt.

## Claims

1. Method for forwarding cells transmitted in an asynchronous transfer mode (ATM) via at least one transmission line, the respective cell overhead of which cells contains control information as well as protection information appended thereto, by means of a switching device, in which an evaluation of transmitted cells with respect to the occurrence of bit errors in the cell overheads is performed on the basis of the protection information, and forwarding of cells identified as erroneous on the basis of the cell overheads is prevented, characterized in that an occurrence of a first cell group comprising a defined number of directly successive cells identified as erroneous is evaluated as the beginning of an error burst, in that if an error burst is present, forwarding of cells identified as error-free is prevented until the occurrence of a second cell group comprising a defined number of directly successive cells identified as error-free, in that the occurrence of the respective second cell group is evaluated as the end of the respective error burst, and in that the last cell transmitted of the cells belonging to the respective second cell group is forwarded.

2. Method according to Claim 1, characterized in that first of all an evaluation of transmitted cells is performed in a correction mode in the switching device for the respective transmission line, in which correction mode, when a single-bit error occurs in a transmitted cell overhead, first of all the single-bit error is corrected and then the respective cell is forwarded, in that after the single-bit error has been corrected, subsequent cells are evaluated in an error detection mode, in that monitoring for the occurrence of an error burst is performed in said error detection mode and if such an error burst is present, forwarding of cells identified as erroneous is prevented until the end of the respective error burst, and in that cells transmitted after the end of the respective error burst are initially evaluated in the correction mode again.

3. Method according to Claim 2, characterized in that the occurrence of single-bit errors is recorded statistically in the error detection mode, and in that determined by this statistical recording, a switch is only made over to the correction mode if the probability of the occurrence of single-bit errors is above a defined threshold value.

4. Circuit arrangement for forwarding cells transmitted in an asynchronous transfer mode (ATM) via at least one transmission line, the respective cell overhead of which cells contains control information as well as protection information appended thereto, by means of a switching device, in which, with the aid of an evaluation means (FK, FE) assigned to the respective transmission line, an evaluation of transmitted cells with respect to the occurrence of bit errors in the cell overheads is performed on the basis of the protection information, and forwarding of cells identified as erroneous on the basis of the cell overheads is prevented, for carrying out the method according to Claim 1, characterized in that a counter arrangement (ZA) is connected to the respective evaluation means, which counter arrangement is designed in such a way that on the one hand it monitors for an occurrence of a first cell group comprising a defined number of directly successive cells identified as erroneous and makes available a first control signal indicating the beginning of an error burst when the first cell group occurs, and on the other hand, if an error burst is present, it monitors for an occurrence of a second cell group comprising a defined number of directly successive cells identified as error-free and makes available a second control signal indicating the end of an error burst when the second cell group occurs, and in that determined by the first and second control signal, the evaluation means (FK, FE) is controlled in such a way that, after the first control signal occurs, it prevents the forwarding of subsequent cells identified as error-free until the second control signal occurs.

5. Circuit arrangement for forwarding cells transmitted in an asynchronous transfer mode (ATM) via at least one transmission line, the respective cell overhead of which cells contains control information as well as protection information appended thereto, by means of a switching device, in which an evaluation of transmitted cells with respect to the occurrence of bit errors in the cell overheads is performed on the basis of the protection information, and forwarding of cells identified as erroneous on the basis of the cell overheads is prevented, in which within the switching device there is assigned to the respective transmission line a first means (FK) operating in a correction mode and a second means (FE) operating in an error detection mode, which first and second means can be controlled by a control device (ST) in such a way that first of all the first means is activated for an evaluation of transmitted cells, then on the other hand the second means is activated after an erroneous cell has been detected by said first means, for carrying out the method according to Claim 2, characterized in that a counter arrangement (ZA) is connected to the second means (FE), which counter arrangement is designed in such a way that on the one hand it monitors for the occurrence of a first cell group comprising a defined number of directly successive cells identified as erroneous and makes available a first control signal indicating the beginning of an error burst when said first cell group occurs, and on the other hand, if an error burst is present, it monitors for the occurrence of a second cell group comprising a defined number of directly successive cells identified as error-free and makes available a second control signal indicating the end of an error burst when the second cell group occurs, and in that the first and the second control signal are supplied to the control device (ST), in that following the occurrence of the first control signal the control device controls the second means (FE) in such a way that it prevents the forwarding of subsequently transmitted cells identified as error-free until the second control signal occurs, and in that after the second control signal occurs, the first means (FK) is activated again for the evaluation of transmitted cells.

6. Circuit arrangement according to Claim 5, characterized in that a further counter arrangement (Z3, G5, T) is provided for the statistical recording of the occurrence of single-bit errors which accumulates the single-bit errors occurring within a predetermined time interval when no error burst is present and makes available a third control signal when the accumulated single-bit errors reach a defined threshold value, and in that the first means (FK) for the evaluation of subsequently transmitted cells is activated again by the control device (ST) when the third signal is made available, whereas if the third control signal is not made available the second means (FE) remains activated for the evaluation of subsequently transmitted cells.

## Revendications

1. Procédé pour la retransmission de cellules selon un mode de transport asynchrone (ATM) par l'intermédiaire d'au moins une ligne de transmission, et dans la tête respective desquelles sont contenues des informations de commande ainsi que des informations de sécurité adjointes à ces informations de commande, au moyen d'un dispositif de commutation, dans lequel une évaluation de cellules transmises en ce qui concerne l'apparition d'erreurs sur les bits dans les têtes des cellules est exécutée sur la base des informations de sécurité, et la retransmission de cellules, dont les têtes sont identifiées comme erronées, est empêchée, caractérisé par le fait
qu'une apparition d'un premier groupe de cellules qui comprend des cellules se succédant directement et identifiées comme erronées, est évaluée en tant que début d'un paquet d'erreurs,
que lors de la présence d'un paquet d'erreurs, la retransmission de cellules identifiées comme sans erreur est bloquée jusqu'à l'apparition d'un second groupe de cellules comprenant un nombre fixé de cellules se succédant directement et identifiées comme exemptes d'erreurs,
que l'apparition du second groupe de cellules considéré est évaluée comme étant la fin du paquet respectif d'erreurs, et que les cellules transmises en dernier lieu, qui font partie des cellules associées au second groupe de cellules considéré, sont retransmises.

2. Procédé suivant la revendication 1, caractérisé par le fait que dans le dispositif de commutation, pour la retransmission respective une évaluation de cellules transmises est tout d'abord exécutée dans un mode de correction, dans lequel, lors de l'apparition d'une erreur de bit individuel dans une tête de cellule transmise, l'erreur de bit individuel est corrigée et ensuite la cellule respective est retransmise,
qu'après la correction de l'erreur de bit individuel, l'évaluation de cellules successives est exécutée dans un mode d'identification d'erreurs,
que dans ce mode d'identification d'erreurs, l'apparition d'un paquet d'erreurs est contrôlée et, lors de l'apparition d'un tel paquet d'erreurs, la retransmission de cellules identifiées comme erronées est empêchée jusqu'à la fin du paquet d'erreurs considéré, et
que des cellules transmises à la fin du paquet d'erreurs considéré sont d'abord évaluées à nouveau dans le mode de correction.

3. Procédé suivant la revendication 2, caractérisé par le fait
qu'une détection statistique de l'apparition d'erreurs de bits individuels est exécutée dans le mode d'identification d'erreurs, et
qu'en fonction de cette détection statistique, le fonctionnement passe en mode de correction uniquement lorsque la probabilité d'apparition d'erreurs de bits individuels est supérieure à une valeur de seuil fixée.

4. Montage pour la retransmission de cellules selon un mode de transport asynchrone (ATM) par l'intermédiaire d'au moins une ligne de transmission, et dont la tête respective contient des informations de commande ainsi que des informations de sécurité adjointes à ces informations de commande, au moyen d'un dispositif de commutation, dans lequel une évaluation de cellules transmises, en ce qui concerne l'apparition d'erreurs sur les bits dans les têtes des cellules, est exécutée au moyen d'un dispositif d'évaluation (FK,FE), associé à la ligne de transmission respective, sur la base des informations de sécurité, et la retransmission de cellules dont les têtes sont identifiées comme erronées, est empêchée, pour la mise en oeuvre du procédé suivant la revendication 1,
caractérisé par le fait
qu'au dispositif respectif d'évaluation est relié un dispositif de comptage (ZA) agencé de telle sorte que ce dernier, d'une part, contrôle une apparition d'un premier groupe de cellules comprenant un nombre fixé de cellules se succédant directement et identifiées comme erronées et, lors de l'apparition du premier groupe de cellules, prépare un signal de commande indiquant le début d'un paquet d'erreurs, et, d'autre part, dans le cas de la présence d'un paquet d'erreurs, contrôle une apparition d'un second groupe de cellules, qui comprend un nombre fixé de cellules se succédant directement et identifiées comme exemptes d'erreurs, et, lors de l'apparition du second groupe de cellules, prépare un second signal de commande indiquant la fin d'un paquet d'erreurs, et
que le dispositif d'évaluation (FK,FE) est commandé en fonction des premier et second signaux de commande de telle sorte qu'après l'apparition du premier signal d'erreur, ce dispositif bloque la retransmission de cellules suivantes, identifiées comme exemptes d'erreurs, jusqu'à l'apparition du second signal de commande.

5. Montage pour la retransmission de cellules selon un mode de transport asynchrone (ATM) par l'intermédiaire d'au moins une ligne de transmission, et dont la tête respective contient des informations de commande ainsi que des informations de sécurité adjointes à ces informations de commande, au moyen d'un dispositif de commutation, dans lequel, sur la base des informations de sécurité, une évaluation de cellules transmises est exécutée en ce qui concerne l'apparition d'erreurs sur les bits dans les têtes des cellules, et la retransmission de cellules, dont les têtes sont identifiées comme erronées, est bloquée, et dans lequel, à l'intérieur du dispositif de commutation, à la ligne de transmission respective sont associés un premier dispositif (FK) qui travaille selon un mode de correction, et un second dispositif (FE) qui travaille selon un mode d'identification d'erreurs, ces dispositifs pouvant être commandés à partir d'un dispositif de commande (ST) de telle sorte qu'au moins le premier dispositif est activé après l'identification de la cellule erronée par ce dispositif, tandis que le second dispositif est activé pour une évaluation de cellules transmises, pour la mise en oeuvre du procédé suivant la revendication 2,
caractérisé par le fait
qu'au second dispositif (FE) est relié un dispositif de comptage (ZA), agencé de telle sorte que ce dernier, d'une part, contrôle une apparition d'un premier groupe de cellules comprenant un nombre fixé de cellules se succédant directement et identifiées comme erronées et, lors de l'apparition du premier groupe de cellules, prépare un signal de commande indiquant le début d'un paquet d'erreurs, et d'autre part, dans le cas de la présence d'un paquet d'erreurs, contrôle une apparition d'un second groupe de cellules, qui comprend un nombre fixé de cellules se succédant directement et identifiées comme exemptes d'erreurs, et, lors de l'apparition du second groupe de cellules, prépare un second signal de commande indiquant la fin d'un paquet d'erreurs, et
que les premier et second signaux de commande sont envoyés au dispositif de commande (ST),
que, lors de l'apparition du premier signal de commande, le signal de commande contrôle le second dispositif (FE) de telle sorte que ce dernier empêche la retransmission de cellules transmises successivement et identifiées comme exemptes d'erreurs, jusqu'à l'apparition du second signal de commande, et
qu'après l'apparition du second signal de commande, le premier dispositif (FK) est à nouveau activé pour l'évaluation de cellules transmises.

6. Montage suivant la revendication 5, caractérisé par le fait
qu'il est prévu un autre dispositif de comptage (Z3,G5,T) pour la détermination statistique de l'apparition d'erreurs de bits individuels, qui, dans le cas de l'absence d'un paquet d'erreurs, accumule les erreurs de bits individuels, qui apparaissent pendant un intervalle de temps prédéterminé, et, lorsque les erreurs cumulées de bits individuels atteignent une valeur de seuil fixée, délivre un troisième signal de commande, et
qu'à partir du dispositif de commande (SE), lors de la délivrance du troisième signal de commande, le premier dispositif (FK) est à nouveau activé pour évaluer des cellules transmises successivement, alors que, dans le cas de la non délivrance du troisième signal de commande, le second dispositif (FE) reste activé pour l'évaluation de cellules transmises ensuite.
